(19) Europäisches Patentamt
European Patent Office
Office européen des brevets

(11) **EP 2 553 761 B1**

(12) **EUROPÄISCHE PATENTSCHRIFT**

(45) Veröffentlichungstag und Bekanntmachung des Hinweises auf die Patenterteilung:
**28.11.2018 Patentblatt 2018/48**

(21) Anmeldenummer: **11715864.2**

(22) Anmeldetag: **24.03.2011**

(51) Int Cl.:
***H01Q 1/32*** *(2006.01)*     ***H01Q 13/28*** *(2006.01)*

(86) Internationale Anmeldenummer:
**PCT/DE2011/000305**

(87) Internationale Veröffentlichungsnummer:
**WO 2011/120500 (06.10.2011 Gazette 2011/40)**

(54) **WELLENLEITERANTENNE FÜR EINE RADARANTENNENANORDNUNG**

WAVEGUIDE ANTENNA FOR A RADAR ANTENNA ARRAY

ANTENNE GUIDE D'ONDE POUR UN SYSTÈME D'ANTENNE RADAR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **31.03.2010 DE 102010013590**

(43) Veröffentlichungstag der Anmeldung:
**06.02.2013 Patentblatt 2013/06**

(73) Patentinhaber: **Conti Temic Microelectronic GmbH**
**90411 Nürnberg (DE)**

(72) Erfinder:
• **MÖBIUS, Arnold**
**88131 Lindau (DE)**
• **FEY, Wolfgang**
**88131 Bodolz (DE)**

(56) Entgegenhaltungen:
**DE-A1-102004 049 626**    **JP-A- 2009 212 828**
**US-A1- 2010 001 917**

• **IWASAKI T ET AL: "A Novel Composite Right/Left-Handed Rectangular Waveguide with Tilted Corrugations and Its Application to Millimeter-Wave Frequency-Scanning Antenna", IEICE TRANSACTIONS ON COMMUNICATIONS, COMMUNICATIONS SOCIETY, TOKYO, JP, Bd. E92B, Nr. 12, 1. Dezember 2009 (2009-12-01), Seiten 3843-3849, XP001552453, ISSN: 0916-8516, DOI: DOI:10.1587/TRANSCOM.E92.B.3843**
• **GUGLIELMI M ET AL: "BROADSIDE RADIATION FROM PERIODIC LEAKY-WAVE ANTENNAS", IEEE TRANSACTIONS ON ANTENNAS AND PROPAGATION, IEEE SERVICE CENTER, PISCATAWAY, NJ, US, Bd. 41, Nr. 1, 1. Januar 1993 (1993-01-01), Seiten 31-37, XP000358543, ISSN: 0018-926X, DOI: DOI:10.1109/8.210112**

**Beschreibung**

Die Erfindung betrifft eine Wellenleiterantenne für eine Radarantennenanordnung, insbesondere zum Einsatz in Kraftfahrzeugen.

Derartige Antennen sind beispielsweise aus der US 5 572 228 bekannt, die mechanisch schwenkend realisiert sind, in dem sie eine oberflächenstrukturierte Trommel in unmittelbarer Nähe eines dielektrischen Wellenleiters rotieren lassen. Die Oberflächenstrukturierung der Trommel ist durch einzelne Metallstreifen ausgeführt, deren Abstand sich bei Rotation der Trommel im Bereich des dielektrischen Wellenleiters verändert. Dadurch wird eine rotationswinkelabhängige Leistungsauskopplung über eine sogenannte Leckwelle aus dem dielektrischen Wellenleiter bewirkt. Die ausgekoppelte Leistung verteilt sich im Raum jeweils in Form einer durch eine gerichtete Antennencharakteristik beschreibbaren Abstrahlung. Die Polarisation der abgestrahlten Welle ist dabei parallel zu den auf der Trommel vorhandenen Metallstreifen orientiert.

Gemäß der WO 2006/039 896 A1 wird ein alternativer Wellenleitertyp eingesetzt, der in der Nähe einer Störstruktur wie beispielsweise einer oberflächenstrukturierten Trommel angeordnet ist. Der Wellenleiter weist beabstandete metallische Flächen auf, zwischen welchen ein dielektrisches Medium angeordnet ist. Die elektromagnetische Welle wird zwischen die metallischen Flächen in Längsrichtung eingekoppelt. Die metallischen Flächen verlaufen in Längsrichtung, sind einer ersten Querrichtung zur Störstruktur und der dazu gegenüberliegenden Seite hin offen und zueinander in einer zweiten Querrichtung beabstandet, wobei die zweite Querrichtung sowohl senkrecht zur ersten Querrichtung als auch zur Längsrichtung des Wellenleiters steht. Ein derartiger Wellenleiter weist große ohmsche Verluste auf. Eine erhöhte Bauteileanzahl führt zu einer Steigerung der Herstellkosten und bewirkt aufgrund der rotierenden Walze eine störanfällige Anwendung der Antenne. Weiterhin macht die rotierende Walze eine Reduzierung von Fertigungstoleranzen und mechanischen Belastungen erforderlich, so dass der Fertigungsaufwand zusätzlich steigt und ein derartiger Wellenleiter kostenintensiv ist.

Iwasaki et al. offenbaren in dem Artikel "A Novel Composite Right/Left-Handed Rectangular Waveguide with Tilted Corrugations and its Application to Millimenter- Wave-Frequency Scanning Antenna" (IEICE Transactions on Communications Society, Tokyo, JP, BD.E92B, Nr.12, 1.12. 2009, S.3834-3849, XP001552452, ISSN: 0916-8516, DOI: 10.1587/TRANSCOM.E92.B.3843) einen Wellenleiter mit Strukturelementen im Innenraum des Wellenleiters zur Auskopplelung von Elektromagnetischer Strahlung.

Es ist eine Aufgabe der vorliegenden Erfindung, eine Wellenleiterantenne für eine Radarantennenanordnung zu gestalten, bei der geringe Verluste während ihrer Anwendung auftreten und die gleichzeitig robust und kostengünstig herstellbar ist.

Diese Aufgabe ist erfindungsgemäß gelöst durch eine Wellenleiterantenne mit den im Anspruch 1 angegebenen Merkmalen.

Erfindungsgemäß wurde erkannt, dass ein metallischer Hohlleiter eine Radarwelle einer ersten Mode führt und eine Abstrahlung der Radarwelle in einer von der ersten Mode verschiedenen zweiten Mode aus dem Hohlleiter durch Strukturelemente erfolgt. Dabei erstreckt sich der Hohlleiter in einer x-Richtung und begrenzt zur Ausbreitung der Radarwelle in der ersten Mode in der x-Richtung einen Innenraum, in den sich die Strukturelemente erstrecken. Die Strukturelemente wirken auf die in dem Hohlleiter in der ersten Mode geführte Radarwelle als Störstellen, an welchen ein Teil der geführten Leistung in die zweite Mode umgewandelt und ausgekoppelt wird, wodurch man eine Phased-Array-Antenne bekommt. Es wurde gefunden, dass bei einer geeignet beabstandeten Anordnung der Strukturelemente entlang der x-Richtung eine gezielte Auskopplung der Leistung von der ersten Mode von der in dem Hohlleiter geführten Radarwelle in die zweite Mode möglich ist. Dazu muss ein Abstand benachbarter Strukturelemente größer sein als eine halbe Freiraumwellenlänge der Radarwelle der ersten Mode. Für den Fall, dass ein Dielektrikum im Hohlleiter angeordnet ist, kann die Hohlleiter-Wellenlänge kleiner als die Freiraumwellenlänge werden und der Abstand der benachbarter Strukturelemente muss in diesem Fall größer sein als eine halbe Hohlleiter-Wellenlänge. Durch die Anordnung der Strukturelemente entlang der x-Richtung können entsprechend der damit erzeugten Phasenbelegungen verschiedene Abstrahlrichtungen der abgestrahlten Welle in der zweiten Mode eingestellt werden. Bei einer Anordnung benachbarter Strukturelemente entsprechend einer Wellenleiterantenne nach Anspruch 1 kann eine konstruktive Überlagerung der abgestrahlten zweiten Mode in nur wenige und insbesondere in nur eine Richtung erfolgen. Durch eine nicht-periodische Anordnung von Strukturelementen einer Wellenleiterantenne nach Anspruch 1 können unerwünschte, entgegen einer Ausbreitungsrichtung der in den Hohlleiter eingespeisten Radarwelle in der ersten Mode auftretende konstruktive Überlagerungen unterdrückt werden. Die nicht-periodische Anordnung der Strukturelemente wird auch als Verjittern bezeichnet.

Bei einer Gestaltung der Strukturelemente gemäß Anspruch 2 wird bei der Auskopplung der zweiten Mode eine Symmetrieebene um 90° gegenüber der ersten Ausgangsmode gedreht. Somit kann beispielsweise von der in dem Hohlleiter geführten Grundmode, der TE10-Mode, der Radarwelle eine weitere Grundmode, die TE01-Mode, ausgekoppelt werden. Das bedeutet, dass die in einer transversalen Richtung symmetrische Verteilung des elektromagnetischen Feldes unsymmetrisch gewandelt werden muss. Daher sind die eine Querachse aufweisenden Strukturelemente derart schräg angeordnet, dass deren Querachse und die Längsachse des Hohlleiters einen spitzen Winkel einschließen.

Eine Wellenleiterantenne nach Anspruch 3 gewährleistet konstante Abstrahleigenschaften an den Strukturelementen.

Eine Wellenleiteranordnung gemäß Anspruch 4 weist einen robusten Aufbau auf und kann kostengünstig hergestellt werden. Die Verwendung von Rippen als Strukturelemente ermöglicht die integrierte Fertigung der Strukturelemente an Seitenwänden des Hohlleiters.

Strukturelemente, die entsprechend einer Wellenleiterantenne nach Anspruch 5 gestaltet sind, ermöglichen einerseits die erfindungsgemäße Auskopplung der in dem Hohlleiter geführten Radarwelle und gleichzeitig die Unterdrückung von sogenannten Beugungs-Keulen, die auch als Grating Lobes bezeichnet werden. Grating Lobes können auftreten, wenn die Wellenlänge der im Hohlleiter geführten Radarwelle größer oder gleich der Freiraumwellenlänge ist. Bei geeigneter Gestaltung der Strukturelemente als zweistufige Rippen gemäß dem Anspruch 5 können üblicherweise notwendige Zusatzmaßnahmen zur Unterdrückung von Grating Lobes vermieden werden.

Eine Wellenleiterantenne nach Anspruch 6 ermöglicht eine Drehung der Symmetrieebene der ausgekoppelten zweiten Mode gegenüber der in dem Hohlleiter geführten ersten Mode.

Mit einer Wellenleiterantenne nach Anspruch 7 wird zur Unterdrückung von Grating Lobes die Wellenlänge der in dem Hohlleiter geführten Radarwelle gegenüber der des freien Raums verkürzt. Dafür sind in dem Hohlleiter entweder ein Dielektrikum oder periodisch angeordnete Blenden vorgesehen.

Eine Wellenleiterantenne nach Anspruch 8 ist robust aufgebaut. Insbesondere weist eine derartige Wellenleiterantenne eine hohe mechanische Festigkeit auf.

Eine Wellenleiterantenne nach Anspruch 9 kann unkompliziert und kostengünstig hergestellt werden, indem die Strukturelemente an der Bodenplatte angeordnet sind.

Bei einer Gestaltung des Hohlleiters bei einer Wellenleiterantenne nach Anspruch 10 kann die in dem Hohlleiter geführte Radarwelle, insbesondere eine TE10-Mode, auch durch eine an einem oberen Ende angeordnete Öffnung des Hohlleiters nicht entweichen. In einem derartigen Hohlleiter ist die in x-Richtung eingespeiste Radarwelle in dem Hohlleiter gefangen und strahlt - außer über die Strukturelemente - keine Leistung ab.

Bei einer gewölbten Gestaltung der Seitenwände des Hohlleiters gemäß einer Wellenleiterantenne nach Anspruch 11 ist die Formung der abgestrahlten Radarwelle in der y-Richtung weiter verbessert.

Ausführungsbeispiele der Erfindung werden nachfolgend anhand der Zeichnung näher erläutert. In dieser zeigen:

Fig. 1 eine Wellenleiterantenne mit einer Bodenplatte gemäß einem ersten Ausführungsbeispiel,

Fig. 2 eine Schnittdarstellung in einer zu einer x-z-Ebene parallelen Schnittebene entlang der Schnittlinie II-II in Fig. 1,

Fig. 3 eine perspektivische Darstellung einer Bodenplatte gemäß einem weiteren Ausführungsbeispiel für eine Wellenleiterantenne gemäß Fig. 1,

Fig. 4 eine Fig. 1 entsprechende perspektivische Darstellung einer Wellenleiterantenne gemäß einem weiteren Ausführungsbeispiel,

Fig. 5 eine perspektivische Darstellung einer Wellenleiterantenne gemäß einem weiteren Ausführungsbeispiel mit einem auf eine Bodenplatte aufzusetzenden Hohlleiter in einem nicht verbundenen Zustand,

Fig. 6 eine Schnittdarstellung in einer zu einer y-z-Ebene parallelen Schnittebene entlang der Schnittlinie VI-VI in Fig. 5,

Fig. 7 eine Fig. 5 entsprechende Darstellung der Wellenleiterantenne in einem verbundenen Zustand von Hohlleiter und Bodenplatte,

Fig. 8 eine Schnittdarstellung in einer zu einer y-z-Ebene parallelen Schnittebene entlang der Schnittlinie VIII-VIII in Fig. 7,

Fig. 9 eine vergrößerte Ansicht einer Anbindung des Hohlleiters an die Bodenplatte Detail IX in gemäß Fig. 8,

Fig. 10 eine schematische Darstellung mehrerer Wellenleiterantennen gemäß einem weiteren Ausführungsbeispiel mit einem Hohlleiter, einer Bodenplatte und einer Abdeckung,

Fig. 11 eine Schnittdarstellung in einer zu einer y-z-Ebene parallelen Schnittebene entlang der Schnittlinie XI-XI in Fig. 10,

Fig. 12 eine Fig. 11 entsprechende Schnittdarstellung eines weiteren Ausführungsbeispiels mit einer auf mehrere Wellenleiterantennen aufgesetzten Abdeckung,

Fig. 13 eine vergrößerte Detailansicht gemäß Fig. 12 zur Darstellung der Verbindung der Abdeckung an den Wellenleiterantennen und

Fig. 14 eine Fig. 11 entsprechende Schnittdarstellung eines weiteren Ausführungsbeispiels einer Wellenleiterantenne.

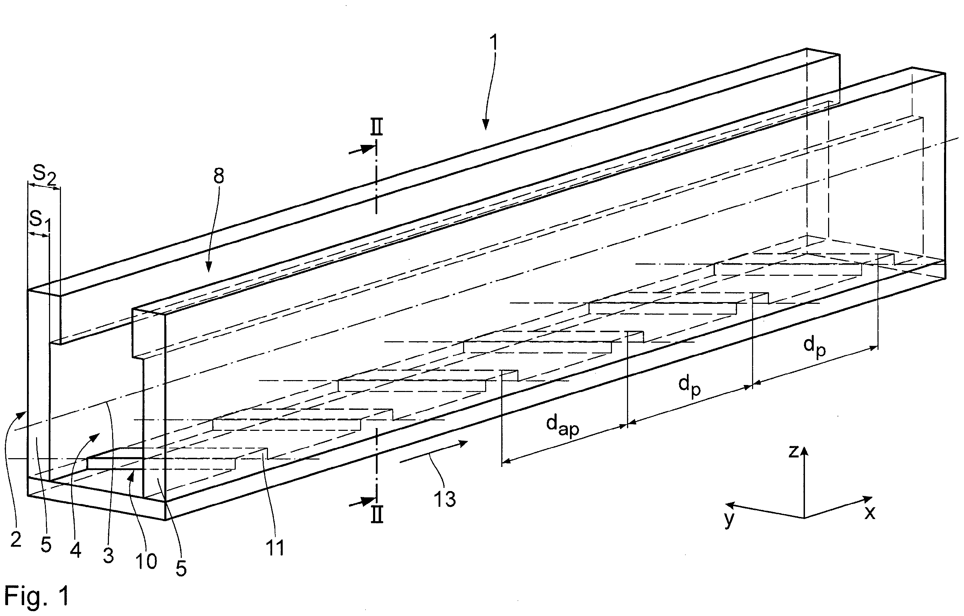

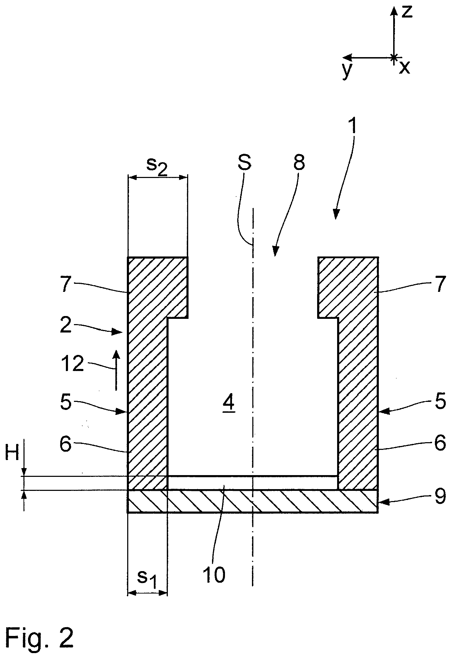

Die Fig. 1 und 2 zeigen ein erstes Ausführungsbeispiel einer Wellenleiterantenne 1 für eine Radarantennenanordnung, die insbesondere in Kraftfahrzeugen für eine Abstandsermittlung und/oder Abstandsüberwachung eingesetzt werden kann. Dabei ist die Wellenleiterantenne 1 in an sich bekannter Weise in die Radarantennenanordnung integriert. Die Wellenleiterantenne 1 weist einen metallischen Hohlleiter 2 auf, der sich in einer x-Richtung erstreckt und eine zu der x-Richtung parallel verlaufende Längsachse 3 aufweist. Der Hohlleiter 2 begrenzt zur Ausbreitung einer Radarwelle einer ersten Mode in der x-Richtung einen Innenraum 4. Die Radarwelle in der ersten Mode breitet sich in dem Innenraum 4 mit einer Hohlleiter-Wellenlänge $\lambda_1$ aus.

Die Wellenleiterantenne 1 gemäß dem gezeigten Ausführungsbeispiel ist besonders geeignet, um die Grundmode TE10 in dem Hohlleiter 2 zu führen. Dazu weist der Hohlleiter 2 einen in einer zur x-Richtung senkrechten z-Richtung orientierten, im Wesentlichen U-förmigen Querschnitt auf, der zwei symmetrisch gegenüberliegend angeordnete Seitenwände 5 aufweist, die identisch ausgebildet sind. Die Seitenwände 5 weisen bezogen auf die vertikale z-Richtung jeweils einen unteren Seitenwandabschnitt 6 und einen einstückig daran angeformten oberen Seitenwandabschnitt 7 auf, der eine größere Wandstärke $s_2$ entlang einer sowohl zu der x-Richtung als auch z-Richtung senkrecht orientierten y-Richtung aufweist als eine Wandstärke $s_1$ des unteren Seitenwandabschnitts 6. Damit ist der Innenraum 4 entlang der z-Richtung nach oben verjüngt. Obwohl der Hohlleiter 2 mit einer im Wesentlichen rechteckigen Außenkontur an einem oberen Ende eine Öffnung 8 aufweist, kann die sich entlang der x-Richtung in dem Hohlleiter 2 ausbreitende TE10-Mode der Radarwelle nicht aus dem Hohlleiter 2 über die Öffnung 8 austreten. Durch die Öffnung 8 wird somit keine Leistung der Radarwelle abgestrahlt.

Infolge der identischen Gestaltung der Seitenwände 5 ist die Wellenleiterantenne 1 mit dem Hohlleiter 2 im Wesentlichen symmetrisch zu einer zur x-z-Ebene parallelen Symmetrieebene S ausgebildet.

Der Hohlleiter 2 ist an einer der Öffnung 8 gegenüberliegend angeordneten Unterseite mit einer Bodenplatte 9 beispielsweise durch Verkleben oder Angalvanisieren fest verbunden, so dass der Hohlleiter 2 nach unten dicht abgeschlossen ist. Die Bodenplatte weist einen rechteckigen Querschnitt auf und ist in ihrer Form dem Hohlleiter 2 angepasst.

In dem gezeigten Ausführungsbeispiel weist der Hohlleiter 2 mehrere in der x-Richtung angeordnete, sich in den Innenraum 4 erstreckende Strukturelemente in Form von Rippen 10 auf. Die Rippen 10 weisen jeweils eine Querachse 11 auf, die mit der Längsachse 3 einen spitzen Winkel einschließt. Die Rippen 10 verbinden die beiden gegenüberliegenden Seitenwände 5 und sind gemäß dem gezeigten Ausführungsbeispiel in den Fig. 1 und 2 einstückig an die Seitenwände 5 angeformt. Es ist auch möglich, dass die Rippen 10 unabhängig von den Seitenwänden 5 hergestellt und anschließend mit diesen verbunden werden.

Die Rippen 10 dienen dazu, die in dem Hohlleiter 2 entlang der x-Richtung geführte TE10-Mode gezielt aus dem Hohlleiter 2 auszukoppeln durch Umwandlung in eine andere Mode, bevorzugt in die TE01-Mode. Die Radarwelle breitet sich in der zweiten Mode mit einer Hohlleiter-Wellenlänge $\lambda_2$ aus, die von der Hohlleiter-Wellenlänge $\lambda_1$ der Radarwelle in der ersten Mode im Allgemeinen verschieden ist. Bei der Umwandlung von der TE10-Mode in die TE01-Mode wird eine Symmetrieebene der TE10-Mode um 90° gedreht, was gleichbedeutend damit ist, dass eine entlang einer zur z-Richtung parallelen transversalen Richtung 12 symmetrische Feldverteilung der TE10-Mode in eine unsymmetrische Feldverteilung entlang der transversalen Richtung 12 der TE01-Mode umgewandelt wird. Dazu sind die Rippen 10 bezüglich einer zur x-Richtung parallelen Ausbreitungsrichtung 13 der Radarwelle der TE10-Mode unsymmetrisch, d. h. schräg angeordnet, indem die Querachse 11 mit der Längachse 3 einen spitzen Winkel einschließt. Die TE01-Mode wird in der x-z-Ebene aus dem Hohlleiter 2 abgestrahlt. Die Abstrahlrichtung der TE01-Mode liegt dabei in einem Winkelbereich von $\pm$ 20° um die z-Achse. Wird die TE01-Mode aus dem Hohlleiter 2 abgestrahlt, weist die Radarwelle wieder die Freiraum-Wellenlänge $\lambda_0$ auf. Bei geeigneter Wahl der Länge des Hohlleiters kann die Hohlleiter-Wellenlänge $\lambda_2$ derart beeinflusst werden, dass sie in etwa der Freiraum-Wellenlänge $\lambda_0$ entspricht.

Die Rippen 10 sind zur gezielten Umwandlung der ersten Mode, beispielsweise der TE10-Mode, in eine davon verschiedene zweite Mode, beispielsweise der TE01-Mode, der Radarwelle und zur Auskopplung der zweiten Mode aus dem Hohlleiter 2 in der x-Richtung beabstandet zueinander angeordnet. Dabei sind einige benachbarte Rippen 10 in der x-Richtung mit einem periodischen Abstand $d_p$ zueinander abgeordnet sein. Weiterhin ist es gegeben, dass einige benachbarte Rippen 10 einen nicht-periodischen Abstand $d_{ap}$ in der x-Richtung aufweisen, der gemäß dem gezeigten Ausführungsbeispiel um weniger als 5 % von dem periodischen Abstand $d_p$ abweicht. Infolge der periodischen Anordnung der Rippen 10 wird erreicht, dass sich die abgestrahlte Radarwelle in der TE01-Mode in nur wenigen und insbesondere in nur einer Richtung konstruktiv überlagert. Für den Fall, dass alle Rippen 10 in einem identischen, periodischen Abstand $d_p$ angeordnet sind, der einem ganzzahligen Vielfachen der halben Hohlleiter-Wellenlänge $\lambda_1/2$ der Radarwelle in der ersten Mode entspricht, können konstruktive Überlagerungen auftreten, die entgegen der Ausbreitungsrichtung 13 der Radarwelle der TE10-Mode entgegenwirken. Um diesen negativen Effekt zu vermeiden, sind die Rippen 10 zumindest teilweise entlang der x-Richtung mit leicht variierenden Abständen $d_{ap}$ zueinander und damit nicht-periodisch angeordnet. Um einerseits die Anzahl der Abstrahlungsrichtungen, in welchen sich die TE01-Mode konstruktiv überlagert, so gering wie möglich zu halten und gleichzeitig die konstruktive Überlagerung entgegen der Ausbreitungsrichtung der TE10-Mode in dem Hohlleiter 2 zu minimieren, weicht der nicht-periodische Abstand $d_{ap}$ insbesondere um weniger als 2 % und insbesondere um weniger als 1 % von dem periodischen Abstand $d_p$ ab. In jedem Fall sind die Abstände $d_p$ und $d_{ap}$ größer als die halbe erste Hohlleiter-Wellenlänge $\lambda_1/2$ der Radarwelle der ersten Mode, also der TE10-Mode bzw. größer als die halbe Freiraum-Wellenlänge $\lambda_0/2$.

Die Rippen 10 weisen einen senkrecht zur Querachse 11 orientierten rechteckigen Querschnitt auf, wobei eine Strukturhöhe H entlang der Querachse 11 der Rippen 10 konstant ist.

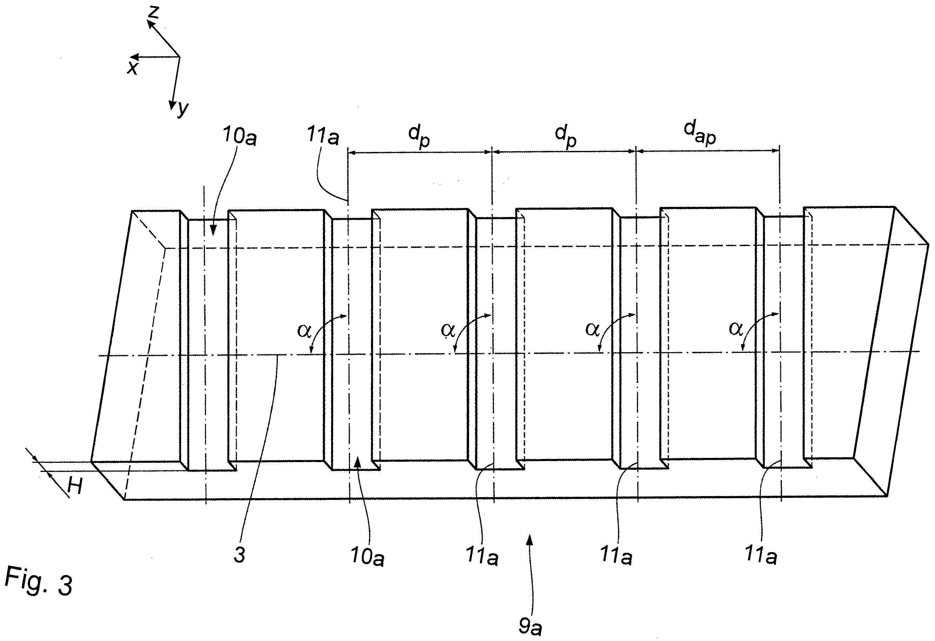

Im Folgenden wird unter Bezugnahme auf die Fig. 3 ein weiteres Ausführungsbeispiel der Erfindung beschrieben. Konstruktiv identische Teile erhalten dieselben Bezugzeichen wie bei dem ersten Ausführungsbeispiel, auf dessen Beschreibung hiermit verwiesen wird. Konstruktiv unterschiedliche, jedoch funktionell gleichartige Teile erhalten dieselben Bezugzeichen mit einem nachgestellten a. Wesentlicher Unterschied der in Fig. 3 dargestellten Bodenplatte 9a, die mit einem nicht dargestellten Hohlleiter zu einer Wellenleiterantenne verbindbar ist, ist die Tatsache, dass die Strukturelemente in Form von Rillen 10a in die Bodenplatte 9 integriert sind. Jede Rille 10a weist einen entlang der Querachse 11a rechteckigen Querschnitt mit einer konstanten Strukturhöhe H auf, wobei die Querachsen 11a und die Längsachse 3 jeweils einen spitzen Winkel $\alpha$ einschließen. Die Rillen 10a sind entlang der x-Richtung ebenfalls in periodischen Abständen $d_p$ und nicht-periodischen Abständen $d_{ap}$ angeordnet. Es ist auch möglich, dass die Strukturelemente in Form von nicht dargestellten Rippen auf der Bodenplatte 9a vorgesehen sind, wobei diese Rippen in den Innenraum des Hohlleiters hineinragen.

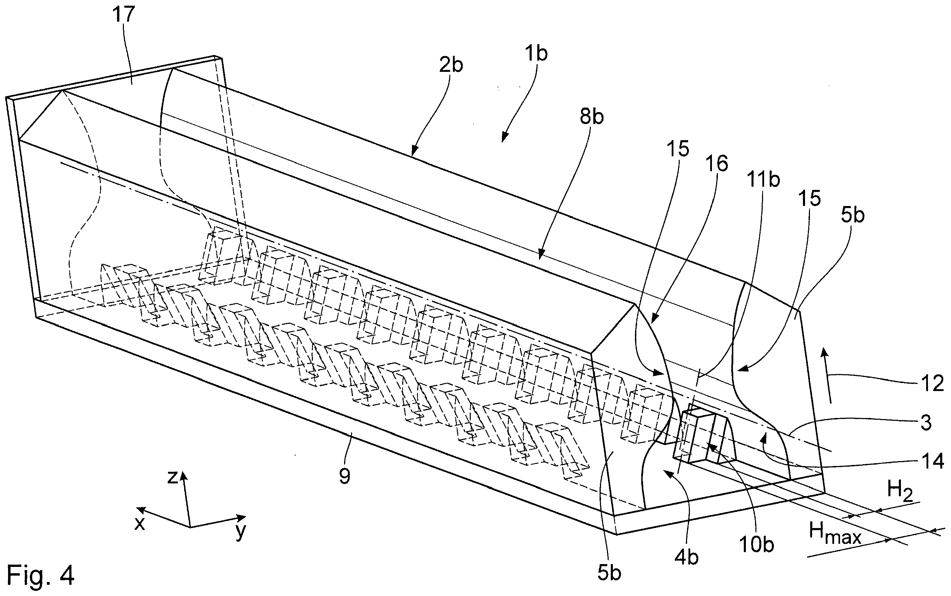

Im Folgenden wird unter Bezugnahme auf Fig. 4 ein weiteres Ausführungsbeispiel der Erfindung beschrieben. Konstruktiv identische Teile erhalten dieselben Bezugzeichen wie bei dem ersten Ausführungsbeispiel, auf dessen Beschreibung hiermit verwiesen wird. Konstruktiv unterschiedliche, jedoch funktionell gleichartige Teile erhalten dieselben Bezugzeichen mit nachgestellten b. Wie bei dem ersten Ausführungsbeispiel sind die Strukturelemente als Rippen 10b an dem Hohlleiter 2b vorgesehen. Gemäß der gezeigten Ausführungsform in Fig. 4 sind die Rippen 10b bezüglich der Querachse 11b als zweistufige Rippe ausgebildet. Die Rippen 10b sind derart zweistufig gestaltet, dass die Rippen 10b entlang der x-Richtung und bezogen auf die Querachse 11b eine maximale Strukturhöhe $H_{max}$ aufweisen, die ausgehend von der Querachse 11b in beiden Richtungen symmetrisch stufenförmig auf eine gegenüber der maximalen Strukturhöhe $H_{max}$ reduzierte Strukturhöhe $H_2$ abnimmt. Der von den Strukturhöhen $H_2$ und $H_{max}$ gebildete T-förmige Querschnitt der Rippe 10b weist entlang der Querachse 11b ebenfalls konstante Strukturhöhen $H_2$, $H_{max}$ auf Die Rippen 10b sind einstückig an den Hohlleiter 2 angeformt, der beispielsweise aus einem metallischen Block gefräst wird.

Die Rippen 10b sind gegenüber der transversalen Richtung 12 geneigt angeordnet, so dass die Querachsen 11b und die Längsachse 3 des Hohlleiters 2b einen spitzen Winkel einschließen. Durch die zweistufige Gestaltung der Rippen 10b ist es einerseits möglich, die Radarwelle mit der zweiten Mode aus dem Hohlleiter 2b der Wellenleiterantenne 1b auszukoppeln und gleichzeitig die sogenannten Grating Lobes zu unterdrücken.

Die Rippen 10b sind an Innenseiten 14 der gegenüberliegend angeordneten Seitenwände 5b vorgesehen. Entlang der x-Richtung sind die Rippen 10b an den gegenüberliegenden Seitenwänden 5b versetzt angeordnet, so dass dadurch die zur Umwandlung und Auskopplung der TE10-Mode in die TE01-Mode notwendige unsymmetrische Anordnung der Strukturelemente gewährleistet ist.

Der Querschnitt des Hohlleiters 2b und damit der Innenraum 4b sind im Wesentlichen sanduhrförmig gestaltet, in dem die Seitenwände 5b jeweils eine zum Innenraum 4b hin gerichtete Wölbung 15 aufweisen. Eine derartige Gestaltung des Hohlleiters 2b mit dem entsprechenden Innenraum 4b dient einerseits einer verbesserten Führung der in der x-Richtung eingespeisten TE10-Mode und andererseits einer Einstellung einer definierten Charakteristik der abgestrahlten TE01-Mode, sowohl in deren Ausbreitungsrichtung als auch in deren azimutaler Richtung. Insbesondere die Formung der Charakteristik der abgestrahlten TE01-Mode in azimutaler Richtung kann durch Gestaltung des Querschnitts des Hohlleiters 2b mit dem Innenraum 4b verbessert werden. Für die Strahlformung der in dem Hohlleiter 2b geführten Radarwelle in der TE10-Mode in der transversalen Richtung 12 weist der Hohlleiter 2b einen zur Öffnung 8b hin sich vergrößernden Querschnitt auf. Dieser Abschnitt des Hohlleiters 2b wird aufgrund seiner gekrümmten Kontur als nicht linearer Ausgangstaper 16 bezeichnet.

Die beiden Seitenwände 5b sind über eine Rückwand 17 einstückig und fest miteinander verbunden. Es ist auch möglich, dass an mit der Rückwand 17 verbundenen Enden gegenüberliegenden Enden der Seitenwände 5b ein so genanntes Übergangssegment an den Hohlleiter 2b anschließt. In diesem Fall sind die Seitenwände 5b zusätzlich durch eine nicht dargestellte, eine Öffnung zur Einspeisung der Radarwelle aufweisende Frontwand verbunden.

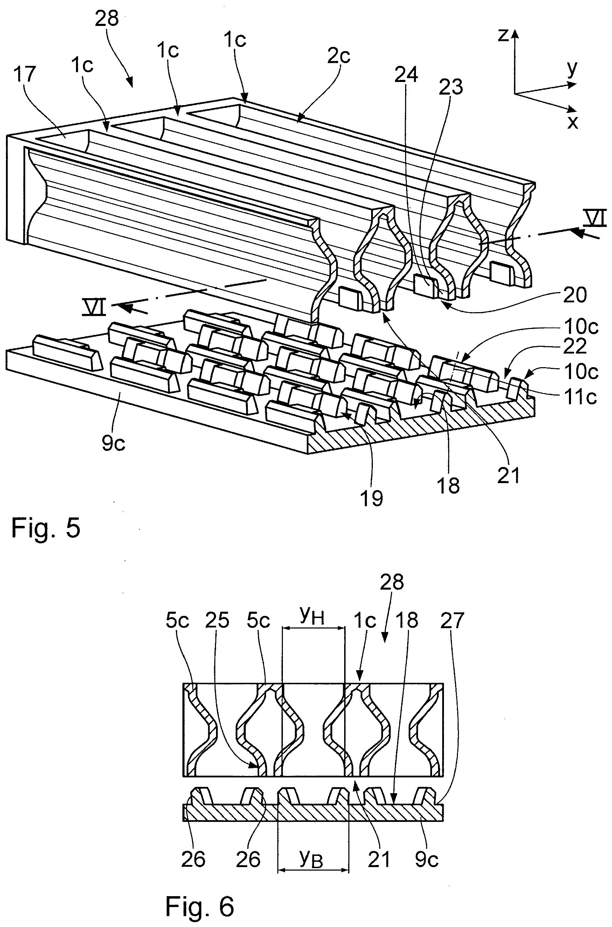

Im Folgenden wird unter Bezugnahme auf die Fig. 5 bis 9 ein weiteres Ausführungsbeispiel der Erfindung beschrieben. Konstruktiv identische Teile erhalten dieselben Bezugzeichen wie bei dem ersten Ausführungsbeispiel, auf dessen Beschreibung hiermit verwiesen wird. Konstruktiv unterschiedliche, jedoch funktionell gleichartige Teile erhalten dieselben Bezugzeichen mit einem nachgestellten c. Das hier gezeigte Ausführungsbeispiel unterscheidet sich im Wesentlichen von den zuvor dargestellten Ausführungsbeispielen dadurch, dass der Hohlleiter 2c mit der Bodenplatte 9c kraftschlüssig und formschlüssig verbindbar ist. Es ist auch möglich, dass der Hohlleiter 2c mit der Bodenplatte 9c entweder kraftschlüssig oder formschlüssig verbindbar ist. Dazu weist die Bodenplatte 9c ein sich von einer Oberseite 18 der Bodenplatte 9c wegerstreckende Bodenplattenprofil 19 auf, das mit einem korrespondierenden Hohlleiterprofil 20 zur kraftschlüssigen und/oder formschlüssigen Verbindung des Hohlleiters 2c mit der Bodenplatte 9c zusammenwirkt. In einem den Fig. 5 und 6 entsprechenden nicht verbundenen Zustand des Hohlleiters 2c mit der Bodenplatte 9c sind sowohl das Bodenplattenprofil 19 als auch das Hohlleiterprofil 20 erkennbar.

Das Bodenplattenprofil 19 umfasst die in der x-Richtung angeordneten sich in den Innenraum 4c erstreckenden Strukturelemente in Form von Rippen 10c, die als bezüglich ihrer Querachse 11c symmetrische zweistufige Rippen ausgebildet sind. Die Rippen 10c sind an den gegenüberliegenden Seitenwänden 5c entlang der x-Richtung versetzt angeordnet und wie vorstehend bereits beschrieben in periodischen Abständen $d_p$ und/oder nicht-periodischen Abständen $d_{ap}$ zueinander beabstandet angeordnet.

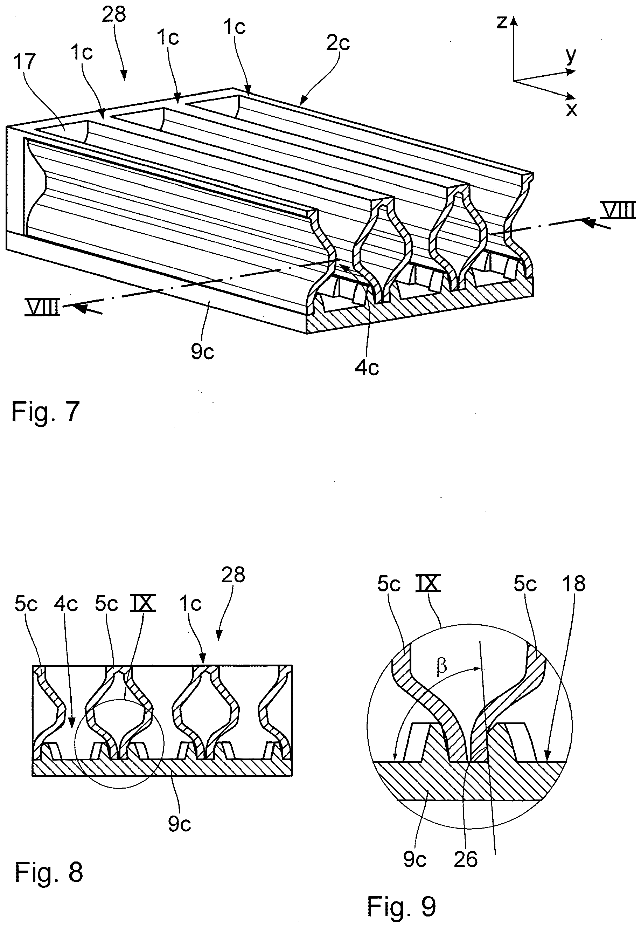

Das Hohlleiterprofil 20 ist an unteren, der Bodenplatte 9c zugewandten Enden der Seitenwände 5c angeordnet. Das Hohlleiterprofil 20 umfasst zwei parallel zu der x-Richtung und beabstandet zueinander angeordnete Befestigungsreihen 21, die zu den Rippen 10c und zwischen beabstandeten Rippen 10c angeordneten Durchbrüchen 22 korrespondierende Ausnehmungen 23 bzw. Befestigungsstege 24 aufweisen. In einem verbundenen Zustand von Hohlleiter 2c mit Bodenplatte 9c, der in den Fig. 7 bis 9 dargestellt ist, liegt das Hohlleiterprofil 20 mit einer dem Innenraum 4c zugewandten Innenseite 25 an einer dem Innenraum 4c abgewandten Außenseite 26 des Bodenplattenprofils flächig an. Dabei greifen die Befestigungsstege 24 des Hohlleiterprofils 20 in die Durchbrüche 22 zwischen benachbarten Rippen 10c ein. Dadurch, dass die Befestigungsstege 24 den Durchbrüchen 22 korrespondierend geformt sind, ist der Hohlleiter 2c mit der Bodenplatte 9c in der x-Richtung formschlüssig verbunden. Die Durchbrüche 22 sind in der z-Richtung nach oben geöffnet, so dass der Hohlleiter 2c mit den Befestigungsstegen 24 von oben entgegen der z-Richtung in die Durchbrüche 22 eingesetzt werden kann.

Gemäß dem gezeigten Ausführungsbeispiel in den Fig. 5 bis 9 ist die Wellenleiterantenne 1c aus Kunststoff hergestellt. Durch eine Metallisierung des Kunststoffs wird die Strahlführung in der Wellenleiterantennen 1c erreicht. Dadurch, dass die Wellenleiterantenne 1c aus Kunststoff hergestellt ist, weisen die Seitenwände 5c eine für den Montagevorgang des Hohlleiters 2c an der Bodenplatte 9c erforderliche Elastizität auf.

Die Elastizität der Seitenwände 5c ist erforderlich, da ein Abstand $y_H$ der Befestigungsreihen 21 an den gegenüberliegend angeordneten Seitenwänden 5c kleiner ist als eine Erstreckung $y_B$ des Bodenplattenprofils 19 in der y-Richtung. Das bedeutet, dass durch ein Aufstecken von oben entgegen der z-Richtung des Hohlleiters 2c auf die Bodenplatte 9c die Seitenwände 5c durch die Rippen 10c des Bodenplattenprofils 19 elastisch voneinander weggebogen werden und damit der Innenraum 4c aufgeweitet wird. Infolge der elastischen Reaktionskräfte in den Seitenwänden 5c, die jeweils auf die gegenüberliegend angeordnete Seitenwand 5c gerichtet sind, ist der Hohlleiter 2c an der Bodenplatte 9c kraftschlüssig vor allem in der z-Richtung gehalten. In dem gezeigten Ausführungsbeispiel sind die Außenseiten 26 gegenüber der Oberseite 18 der Bodenplatte 9c zumindest teilweise geneigt und schließen einen spitzen Winkel $\beta$ ein. Dadurch wird zwischen der Außenseite 26 der Rippen 10c eine Hinterschneidung 27 gebildet, in die die Seitenwand 5c mit ihrem unteren Ende einrasten kann. Dadurch ist es möglich, dass der Hohlleiter 2c auf die Bodenplatte 9c aufgeclipst werden kann und damit lösbar mit der Bodenplatte 9c verbunden ist.

Da die Wellenleiterantenne 1c, also sowohl der Hohlleiter 2c als auch die Bodenplatte 9c, aus Kunststoff hergestellt sind, ist es möglich, den Hohlleiter 2c und die Bodenplatte 9c durch Spritzgießen herzustellen. Es ist auch möglich, eine der beiden Komponenten, also Hohlleiter 2c und Bodenplatte 9c, insbesondere die Bodenplatte 9c, durch die Metalldruckgussverfahren wie beispielsweise Zinkdruckguss herzustellen. Wichtig ist, dass mindestens eine der beiden Komponenten derart elastisch verformbar ist, dass ein Verbinden durch Aufclipsen der Komponenten möglich ist. Aufgrund der Gestaltung des Hohlleiters 2c mit der Rückwand 17 und den daran angeformten Seitenwänden 2c sowie der Bodenplatte 9c mit dem Bodenplattenprofil 19 können diese Teile durch mehrstufige Entformungsschritte, beispielsweise zunächst ein vertikales Entformen entlang der z-Richtung und anschließend ein axiales Entformen entlang der x-Richtung, entformt werden. Dadurch ist eine unkomplizierte und insbesondere kostengünstige Herstellung der Wellenleiterantenne 1c vor allem bei hohen Stückzahlen möglich. Auch die Montage der Wellenleiterantenne 1c ist dadurch vereinfacht und kostengünstig.

Es hat sich gezeigt, dass auftretende Wandströme im Bereich der Rippen 10c in etwa in der gleichen Größenordnung liegen wie bei einem Hohlleiter ohne Strukturelemente. In den Durchbrüchen 22 wird die Leistung abgeschirmt, so dass in diesem Bereich die Wandströme vergleichbar gering sind. In diesen Bereichen ist die Trennstelle zwischen dem zu verbindenden Hohlleiter 2c und Bodenplatte 9c gewählt. An den Rippen 10c ist die Stromdichte dagegen hoch, so dass dort die kraftschlüssige Verbindung zwischen dem Hohlleiter 2c und der Bodenplatte 9c herrscht.

Gemäß den Darstellungen in den Fig. 5 bis 9 ist eine Anordnung 28 mit drei Wellenleiterantennen 1c dargestellt, wobei die Bodenplatte 9c und der Hohlleiter 2c derart ausgebildet sind, dass mehrere Wellenleiterantennen 1c in der y-Richtung nebeneinander angeordnet sind.

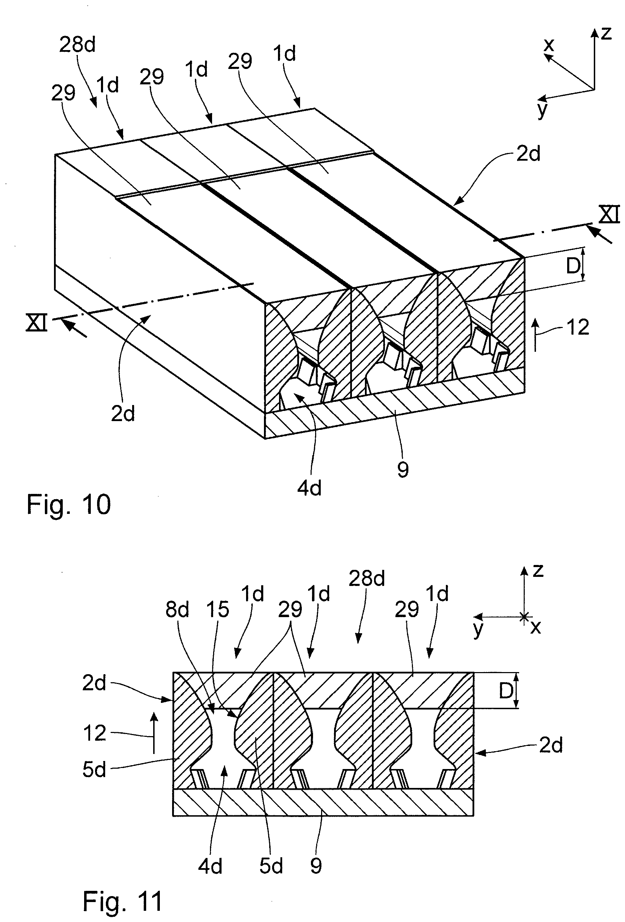

Im Folgenden wird unter Bezugnahme auf die Fig. 10 und 11 ein weiteres Ausführungsbeispiel der Erfindung beschrieben. Konstruktiv identische Teile erhalten dieselben Bezugszeichen wie bei dem ersten Ausführungsbeispiel, auf dessen Beschreibung hiermit verwiesen wird. Konstruktiv unterschiedliche, jedoch funktionell gleichartige Teile erhalten dieselben Bezugszeichen mit einem nachgestellten d. Das in den Fig. 10 und 11 dargestellte Ausführungsbeispiel entspricht einer Anordnung mehrerer Wellenleiterantennen 1d, die in der y-Richtung nebeneinander angeordnet sind. Dazu sind mehrere Hohlleiter 2d auf der Bodenplatte 9 in der y-Richtung nebeneinander angeordnet. Weiterhin ist jeweils in einer Öffnung 8d des Hohlleiters 2d eine Abdeckung 29 auf den Hohlleiter 2d aufgesetzt. Dadurch ist gewährleistet, dass der Innenraum 4d der Wellenleiterantenne 1d nicht nur nach unten durch die Bodenplatte 9, sondern auch nach oben durch die Abdeckung 29 abgeschlossen und damit vor Umwelteinflüssen, insbesondere vor Verschmutzung und Feuchtigkeit geschützt ist.

Andererseits muss die Abdeckung 29 gewährleisten, dass eine Abstrahlung der Radarwelle in der zweiten Mode in der transversalen Richtung 12 möglich ist. Um eine Transparenz der Abdeckung 29 bezüglich der Radarwelle in der zweiten, der TE01-Mode zu ermöglichen, hängt die Dicke D der Abdeckung 29 in transversaler Richtung 12 von einer Wellenlänge der Radarwelle im Medium $\lambda_m$ der Abdeckung 29ab, die sich aus der Freiraum-Wellenlänge $\lambda_0$ und der Dielektrizitätskonstanten des Mediums bestimmen lässt. Insbesondere beträgt die Dicke D ein ganzzahliges Vielfaches der halben Wellenlänge im Medium $\lambda_m$, also:

$$D = n \cdot (\lambda_m/2).$$

Die Abdeckung 29 ist aus Polytetrafluorethylen, das auch unter dem Handelsnamen Teflon bekannt ist, hergestellt und weist als Dämpfungsmaterial SiC auf. Um die in transversaler Richtung 12 abgestrahlte zweite Mode der Radarwelle so gering wie möglich zu dämpfen, wird bevorzugter Weise angestrebt, die Abdeckung 29 mit einer möglichst geringen Dicke D auszustatten, beispielsweise durch die Wahl n = 0 oder n = 1. Da die Dicke der Abdeckung 29 größer 0 sein muss, ist eine Abweichung der Dicke D von dem Nullfachen der halben Wellenlänge im Medium $\lambda_m$ erforderlich. Diese Abweichung beträgt weniger als 20 % der ganzen Wellenlänge im Medium $\lambda_m$ und insbesondere weniger als 10 % der ganzen Wellenlänge im Medium $\lambda_m$. Der Hohlleiter 2d weist einen sanduhrförmig gestalteten Querschnitt auf, wobei die Seitenwände 5d jeweils eine in den Innenraum 4d gerichtete Wölbung 15 aufweisen. Der Querschnitt des Hohlleiters 2d verändert sich somit in der z-Richtung. Die Abdeckung 29 liegt flächig an dem zur Öffnung 8d hin sich aufweitenden Ausgangstaper 16 an, d. h. die Abdeckung 29 liegt zumindest teilweise flächig an den Wölbungen 15 der Seitenwände 5d an. Ein Überkoppeln der in dem Hohlleiter 2d geführten Radarwelle in der ersten Mode in einen benachbarten Hohlleiter 2d wird davon nicht beeinflusst.

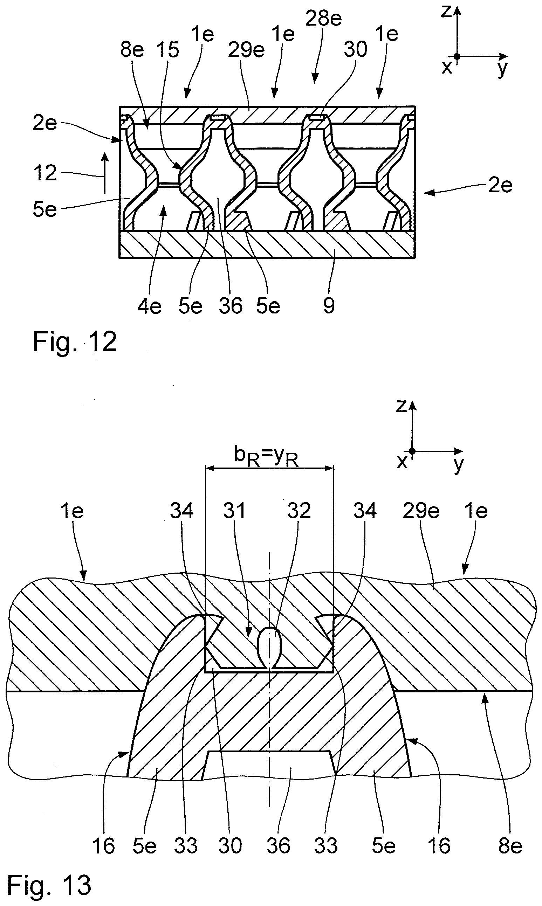

Im Folgenden wird unter Bezugnahme auf die Fig. 12 und 13 ein weiteres Ausführungsbeispiel der Erfindung beschrieben. Konstruktiv identische Teile erhalten dieselben Bezugszeichen wie bei dem ersten Ausführungsbeispiel, auf dessen Beschreibung hiermit verwiesen wird. Konstruktiv unterschiedliche, jedoch funktionell gleichartige Teile erhalten dieselben Bezugszeichen mit einem nachgestellten e. Gemäß diesem Ausführungsbeispiel weist die Anordnung 28e eine gemeinsame, einstückig ausgebildete Abdeckung 29e auf, die sich zumindest teilweise in die oberen Öffnungen 8e der Wellenleiterantennen 1e erstreckt. Die Wellenleiterantennen 1e sind entsprechend der Anordnung 28d gemäß dem Ausführungsbeispiel in den Fig. 10 und 11 in der y-Richtung nebeneinander und parallel zur x-Richtung angeordnet.

Die Seitenwände 5e benachbarter Wellenleiterantennen 1e sind einstückig miteinander ausgebildet und schließen einen Seitenwand-Hohlraum 36 ein. Es ist auch möglich, die Seitenwände 5e einstückig derart miteinander zu verbinden, dass kein Hohlraum sondern ein gemeinsamer, massiver Steg gebildet wird. Die Seitenwände 5e weisen an einem oberen, der Abdeckung 29e zugewandten Ende eine sich entlang der x-Richtung erstreckende Rille 30 auf. Die Rille 30 weist einen senkrecht zur x-Richtung rechteckigen Querschnitt auf und dient zur Aufnahme mindestens eines Rastvorsprungs 31 der Abdeckung 29e zur rastenden Verbindung der Abdeckung 29e mit den Wellenleiterantennen 1e der Anordnung 28e. Dadurch kann die Abdeckung 29e besonders schnell und umkompliziert auf die Anordnung 28e durch Aufclipsen aufgesetzt werden, sodass die Wellenleiterantennen 1e besonders schnell, unkompliziert und kostengünstig hergestellt werden können.

Der Rastvorsprung 31 erstreckt sich ebenfalls in der x-Richtung und kann insbesondere eine gleiche Länge in der x-Richtung aufweisen wie die Rille 30. Es ist auch möglich, dass mehrere Rastvorsprünge 31 entlang der x-Richtung hintereinander angeordnet sind.

Der Rastvorsprung 31 weist einen zentral angeordneten, nach unten zu den Seitenwänden 5e hin geöffneten Deformationsschlitz 32 auf. Weiterhin weist der Rastvorsprung 31 eine Breite $y_R$ in der y-Richtung auf, die im unmontierten Zustand der Abdeckung 29e auf der Anordnung 28e größer ist als eine Breite $b_R$ der Rille 30 in y-Richtung. Da die Abdeckung 29e aus Polytetrafluethylen, also aus Kunststoff, hergestellt ist, ist diese elastisch deformierbar, sodass die Abdeckung 29e mit den Rastvorsprüngen 31 in den Rillen 30 verrastbar ist. Dabei wird die Breite $y_R$ des Rastvorsprungs reduziert, indem der Rastvorsprung 31 in der y-Richtung zusammengedrückt wird. Diese Kompression wird durch den Deformationsschlitz 32 ermöglicht. In dem montierten Zustand der Abdeckung 29e auf der Anordnung 28e gemäß der Darstellung in Fig. 13 sind die Breiten $b_R$ der Rille 30 und $y_R$ des Rastvorsprungs 31 identisch. Die Rille 30 und der Rastvorsprung 31 sind derart gestaltet, dass die Abdeckung 29e in der Anordnung 28e sicher, kraftschlüssig und gleichzeitig wieder lösbar gehalten ist. Weiterhin weist der Rastvorsprung 31 Einführschrägen 33 und Ausführschrägen 34 zum leichteren Montieren und Demontieren der Anordnung 28e auf. Weiterhin dient die Rille 30 der Verhinderung einer Überkopplung von in einer Wellenleiterantenne 1e geführten Radarwelle in eine benachbarte Wellenleiterantenne 1e.

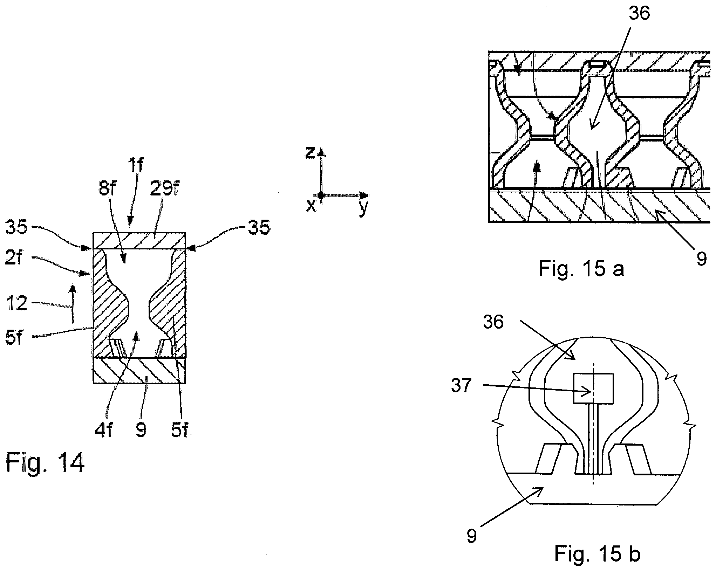

Im Folgenden wird unter Bezugnahme auf Fig. 14 ein weiteres Ausführungsbeispiel der Erfindung beschrieben. Konstruktiv identische Teile erhalten dieselben Bezugszeichen wie beim ersten Ausführungsbeispiel, auf dessen Beschreibung hiermit verwiesen wird. Konstruktiv unterschiedliche, jedoch funktionell gleichartige Teile erhalten dieselben Bezugszeichen mit einem nachgestellten f. Die Wellenleiterantenne 1f weist ebenfalls eine Abdeckung 29f auf, die jedoch nicht in den Innenraum 4f des Hohlleiters 2f hineinragt. Die Abdeckung 29f ist damit ähnlich wie die Bodenplatte 9 flächig mit einem rechteckigen Querschnitt ausgebildet. Die Bodenplatte 9 und die Abdeckung 29f sind jeweils an einem unteren bzw. oberen Ende des Hohlleiters 2f in der z-Richtung angebracht. Die Befestigung von Bodenplatte 9 und Abdeckung 29f an dem Hohlleiter 2f kann beispielsweise durch Kleben oder Angalvanisieren erfolgen.

Es ist möglich, dass die Abdeckung 29f bei der Wellenleiterantenne 1f für einen Teil der abzustrahlenden Leistung aus der TE01-Mode wie ein Wellenleiter wirkt. Das bedeutet, dass Leistung aus der abzustrahlenden TE01-Mode über die Abdeckung 29f in die TE01-Mode einer in y-Richtung benachbarten Wellenleiterantenne gekoppelt und an den Rippenstrukturen in die in dem benachbarten Wellenleiter geführte TE10-Mode gewandelt wird. Diese so genannte Überkopplung von abzustrahlender Leistung von einer Wellenleiterantenne in eine dazu benachbarte Wellenleiterantenne wird durch die Verwendung einer Abdeckung aus Material mit dämpfenden Eigenschaften verringert. Wegen der geringen Dicke D der Abdeckung 29, 29e (vgl. Fig. 10 bis 13) wird die aus der TE01-Mode in z-Richtung abgestrahlte Leistung nur geringfügig gedämpft. Jedoch wird die in den benachbarten Wellenleiter überkoppelte Leistung wegen der größeren Weglänge in der dämpfenden Abdeckung 29, 29e sehr viel stärker gedämpft. Eine weitere Reduzierung der Überkopplung wird durch die Rille 30 gemäß der in den Fig. 12 und 13 dargestellten Wellenleiterantenne 1e erreicht.

In einem weiteren Ausführungsbeispiel wird ein kompakter Aufbau eines Radarsystems basierend auf der erfindungsgemäßen Wellenleiterantenne angegeben. Das Radarsystem umfasst zusätzlich zur Antenne eine Vorrichtung zur Verarbeitung von Hochfrequenzsignalen insbesondere zur Ansteuerung der Antenne bzw. der Erzeugung des abzustrahlenden Signals. Weiterhin ist zur Steuerung des Radarsystems und i.d.R. zur Datenauswertung eine Vorrichtung zur Verarbeitung von Niederfrequenzsignalen vorgesehen. Insbesondere die Bauteile einer Vorrichtung zur Verarbeitung von Niederfrequenzsignalen sind i.d.R. räumlich stark ausgedehnt.

Einige Bauteile z.B. Kondensatoren sind in einer flachen Ausführung nicht ohne weiteres erhältlich. In Fig. 12 ist ein Beispiel für eine Antennenanordnung angegeben, bei der sich ein Raum (36) zwischen den Antennen befindet. Um einen kompakten Aufbau zu erlangen, werden nun Bauteile (37) in den Zwischenräumen (36) angeordnet wie in Fig. 15 dargestellt. Alternativ oder zusätzlich werden Bauteile (Kondensatoren, Platinen etc.) in die Bodenplatte (9) integriert, um den Bauraum effizient zu nutzen

## Patentansprüche

1. Wellenleiterantenne für eine Radarantennenanordnung, insbesondere zum Einsatz in Kraftfahrzeugen, mit einem sich in einer x-Richtung erstreckenden, metallischen Hohlleiter (2; 2b; 2c; 2d; 2f) mit einer Längsachse (3), der zur Ausbreitung einer Radarwelle einer ersten Mode in der x-Richtung einen Innenraum (4; 4b; 4c; 4d; 4f) begrenzt,

   a. wobei zur gezielten Umwandlung der ersten Mode in eine davon verschiedene zweite Mode der Radarwelle und zur Auskopplung der zweiten Mode aus dem Hohlleiter (2; 2b; 2c; 2d; 2f) mehrere in der x-Richtung angeordnete Strukturelemente (10; 10a; 10b; 10c) vorgesehen sind,
   b. wobei benachbarte Strukturelemente (10; 10a; 10b; 10c) einen Abstand ($d_p$, $d_{ap}$) aufweisen, der größer ist als eine halbe Hohlleiter-Wellenlänge ($\lambda_1/2$) der Radarwelle der ersten Mode bzw. größer ist als eine halbe Freiraum-Wellenlänge ($\lambda_0/2$), je nachdem welche der beiden Wellenlängen ($\lambda_1, \lambda_0$) kleiner ist,

   **dadurch gekennzeichnet, dass**
   die Strukturelemente (10; 10a; 10b; 10c) sich in den Innenraum (4; 4b; 4c; 4d; 4f) erstrecken und einige benachbarte Strukturelemente (10; 10a; 10b; 10c) in der x-Richtung mit einem periodischen Abstand ($d_p$) zueinander angeordnet sind und ein nicht-periodischer Abstand ($d_{ap}$) benachbarter Strukturelemente (10; 10a; 10b; 10c) in der x-Richtung um weniger als 5%, insbesondere um weniger als 2% und insbesondere um weniger als 1% von dem periodischen Abstand ($d_p$) abweicht.

2. Wellenleiterantenne nach Anspruch 1, **dadurch gekennzeichnet, dass** sich die Strukturelemente (10; 10a; 10b; 10c) jeweils entlang einer Querachse (11; 11a; 11b; 11c) erstrecken, die mit der Längsachse (3) einen spitzen Winkel einschließt.

3. Wellenleiterantenne nach Anspruch 2, **dadurch gekennzeichnet, dass** die Strukturelemente (10; 10a; 10b; 10c) entlang der Querachse (11; 11a; 11b; 11c) eine konstante Strukturhöhe (H; $H_{max}$, $H_2$) aufweisen.

4. Wellenleiterantenne nach einem der vorstehenden Ansprüche, **dadurch gekennzeichnet, dass** der Hohlleiter (2; 2b; 2c; 2d; 2f) einen in einer zur x-Richtung senkrechten z-Richtung orientierten Querschnitt mit zwei gegenüberliegend angeordneten Seitenwänden (5; 5b; 5c; 5d; 5e; 5f) aufweist, an deren Innenseiten (14) Rippen (10; 10b) als Strukturelemente vorgesehen sind.

5. Wellenleiterantenne nach Anspruch 4, **gekennzeichnet durch** eine bezüglich der Querachse (11b) symmetrische zweistufige Rippe (10b).

6. Wellenleiterantenne nach Anspruch 4 oder 5, **dadurch gekennzeichnet, dass** die Rippen (10; 10b) gegenüberliegender Seitenwände (11; 11b) entlang der x-Richtung versetzt angeordnet sind.

7. Wellenleiterantenne nach einem der vorstehenden Ansprüche, **dadurch gekennzeichnet, dass** zur Verkürzung der Hohlleiter-Wellenlänge ($\lambda_1$, $\lambda_2$) in dem Hohlleiter (2; 2b; 2c; 2d; 2f) ein Dielektrikum oder mit periodischem Abstand angeordnete Blenden vorgesehen sind.

8. Wellenleiterantenne nach einem der vorstehenden Ansprüche, **dadurch gekennzeichnet, dass** der Hohlleiter (2; 2b; 2c; 2d; 2f) mit einer Bodenplatte (9; 9a; 9c) verbunden ist.

9. Wellenleiterantenne nach Anspruch 8, **gekennzeichnet durch** an der Bodenplatte (9a; 9c) angeordnete Rillen (10a) oder Rippen (10c) als Strukturelemente.

10. Wellenleiterantenne nach einem der vorstehenden Ansprüche, **dadurch gekennzeichnet, dass** sich ein Querschnitt des Hohlleiters (2; 2b; 2c; 2d; 2f) in der vertikalen z-Richtung verändert.

11. Wellenleiterantenne nach Anspruch 10, **dadurch gekennzeichnet, dass** der Querschnitt des Hohlleiters (2b; 2c; 2d; 2f) sanduhrförmig gestaltet ist, wobei die Seitenwände (5b; 5c; 5d; 5e; 5f) jeweils eine zum Innenraum (4; 4b; 4c; 4d; 4f) gerichtete Wölbung (15) aufweisen.

12. Radarsensor umfassend

    - zumindest zwei Wellenleiterantennen nach einem der vorherigen Ansprüche, wobei die Antennen auf einer Bodenplatte (9) derart angeordnet sind, dass ein Raum (36) zwischen den Seitenwänden der Antennen gebildet wird
    - eine Vorrichtung zur Verarbeitung von Hochfrequenzsignalen
    - eine Vorrichtung zur Verarbeitung von Niederfrequenzsignalen **wobei** Bauteile (37) der Vorrichtung zur Verarbeitung von Hochfrequenzsignalen und bzw. oder Vorrichtung zur Verarbeitung von Niederfrequenzsignalen in die Bodenplatte (9) integriert und bzw. oder in einem Raum (36) zwischen den Seitenwänden der Antennen angeordnet sind.

13. Radarsensor nach Anspruch 12, wobei die Vorrichtung zur Verarbeitung von Niederfrequenzsignalen eine Platine umfasst und diese in die Bodenplatte integriert angeordnet ist.

14. Radarsensor nach Anspruch 12, wobei zumindest ein Kondensator als Bauteil der Vorrichtung zur Verarbeitung von Niederfrequenzsignalen in einem Raum (36) zwischen den Seitenwänden der Antennen angeordnet ist.

**Claims**

1. A waveguide antenna for a radar antenna array, especially for use in motor vehicles, having a metal waveguide (2; 2b; 2c; 2d; 2f) extending in an x direction and having a longitudinal axis (3), and, for the propagation of a radar wave of a first mode in the x direction, delimiting an inner space (4; 4b; 4c; 4d; 4f),

    a. wherein in order to specifically convert the first mode to a second mode of the radar wave which is different from the first mode and to couple the second mode out of the waveguide (2; 2b; 2c; 2d; 2f), the antenna is provided with multiple structural elements (10; 10a; 10b; 10c) which are arranged in the x direction,
    b. wherein adjacent structural elements (10; 10a; 10b; 10c) have a distance ($d_p$, $d_{ap}$) which is larger than half a waveguide wavelength ($\lambda_1/2$) of the radar wave of the first mode or larger than half a free space wavelength ($\lambda_0/2$), depending on which of the two wavelengths ($\lambda_1$, $\lambda_0$) is smaller,

    **characterised in that**
    the structural elements (10; 10a; 10b; 10c) extend into the inner space (4; 4b; 4c; 4d; 4f) and
    a few adjacent structural elements (10; 10a; 10b; 10c) are arranged in the x direction at a periodic distance ($d_p$) from one another, and
    a non-periodic distance ($d_{ap}$) of adjacent structural elements (10; 10a; 10b; 10c) deviates in the x direction by less than 5%, especially by less than 2% and especially by less than 1% from the periodic distance ($d_p$).

**2.** The waveguide antenna according to Claim 1, **characterised in that** the structural elements (10; 10a; 10b; 10c) each extend along a transverse axis (11; 11a; 11b; 11c), which encloses an acute angle with the longitudinal axis (3).

**3.** The waveguide antenna according to Claim 2, **characterised in that** the structural elements (10; 10a; 10b; 10c) have a constant structural height (H; $H_{max}$; $H_2$) along the transverse axis (11; 11a; 11b; 11c).

**4.** The waveguide antenna according to any one of the preceding claims, **characterised in that** the waveguide (2; 2b; 2c; 2d; 2f) has a cross-section oriented in a z direction perpendicular to the x direction with two side walls (5; 5b; 5c; 5d; 5e; 5f) arranged opposite, on the inner sides (14) of which ribs (10; 10b) are provided as structural elements.

**5.** The waveguide antenna according to Claim 4, **characterised by** a two-stage rib (10b) which is symmetrical with respect to the transverse axis (11b).

**6.** The waveguide antenna according to Claim 4 or 5, **characterised in that** the ribs (10; 10b) of opposite side walls (11; 11b) are arranged offset along the x direction.

**7.** The waveguide antenna according to any one of the preceding claims, **characterised in that** in order to shorten the waveguide wavelength ($\lambda_1$, $\lambda_2$) in the waveguide (2; 2b; 2c; 2d; 2f), a dielectric or diaphragms arranged at a periodic distance is/are provided.

**8.** The waveguide antenna according to any one of the preceding claims, **characterised in that** the waveguide (2; 2b; 2c; 2d; 2f) is connected to a bottom plate (9; 9a; 9c).

**9.** The waveguide antenna according to Claim 8, **characterised by** grooves (10a) or ribs (10c) arranged on the bottom plate (9a; 9c) as structural elements.

**10.** The waveguide antenna according to any one of the preceding claims, **characterised in that** a cross-section of the waveguide (2; 2b; 2c; 2d; 2f) changes in the vertical z direction.

**11.** The waveguide antenna according to Claim 10, **characterised in that** the cross-section of the waveguide (2b; 2c; 2d; 2f) is designed in the form of an hourglass, wherein the side walls (5b; 5c; 5d; 5e; 5f) each have a curvature (15) which is oriented with respect to the inner space (4; 4b; 4c; 4d; 4f).

**12.** A radar sensor comprising

- at least two waveguide antennae according to any one of the preceding claims, wherein the antennae are arranged on a bottom plate (9) such that a space (36) is formed between the side walls of the antennae,
- a device for processing high-frequency signals,
- a device for processing low-frequency signals,
**wherein** components (37) of the device for processing high-frequency signals and/or device for processing low-frequency signals is/are integrated into the bottom plate (9) and/or are arranged in a space (36) between the side walls of the antennae.

**13.** The radar sensor according to Claim 12, wherein the device for processing low-frequency signals comprises a printed circuit board and the latter is arranged integrated into the bottom plate.

**14.** The radar sensor according to Claim 12, wherein at least one capacitor is arranged as a component of the device for processing low-frequency signals in a space (36) between the side walls of the antennae.

**Revendications**

**1.** Antenne guide d'onde pour un système d'antenne radar, en particulier pour l'utilisation dans des véhicules à moteur, avec un guide d'onde (2 ; 2b ; 2c ; 2d ; 2f) métallique s'étendant dans une direction x avec un axe longitudinal (3), lequel guide d'onde délimite un espace intérieur (4 ; 4b ; 4c ; 4d ; 4f) pour la propagation d'une onde radar d'un premier mode dans la direction x,

a. plusieurs éléments de structure (10 ; 10a ; 10b ; 10c) disposés dans la direction x étant prévus pour la conversion ciblée du premier mode en un deuxième mode de l'onde radar différent de celui-ci et pour le découplage du deuxième mode du guide d'onde (2 ; 2b ; 2c ; 2d ; 2f),
b. des éléments de structure (10 ; 10a ; 10b ; 10c) voisins présentant un écart ($d_p$, $d_{ap}$) qui est supérieur à une demi-longueur d'onde de guide d'onde ($\lambda_1$/2) de l'onde radar du premier mode ou supérieur à une demi-longueur d'onde d'espace libre ($\lambda_0$/2), en fonction de celle des deux longueurs d'onde ($\lambda_1$, $\lambda_0$) qui est la plus faible,

**caractérisée en ce que**
les éléments de structure (10; 10a; 10b; 10c) s'étendent dans l'espace intérieur (4; 4b ; 4c ; 4d ; 4f) et certains éléments de structure (10 ; 10a ; 10b ; 10c) voisins étant disposés les uns par rapport aux autres avec un écart périodique ($d_p$) dans la direction x, et un écart non périodique ($d_{ap}$) d'éléments de structure (10 ; 10a ; 10b ; 10c) voisins différant de l'écart

périodique ($d_p$) de moins de 5 %, en particulier de moins de 2 % et en particulier de moins d'1 %, dans la direction x.

**2.** Antenne guide d'onde selon la revendication 1, **caractérisée en ce que** les éléments de structure (10 ; 10a ; 10b ; 10c) s'étendent respectivement le long d'un axe transversal (11 ; 11a ; 11b ; 11c), lequel forme un angle aigu avec l'axe longitudinal (3).

**3.** Antenne guide d'onde selon la revendication 2, **caractérisée en ce que** les éléments de structure (10 ; 10a ; 10b ; 10c) présentent une hauteur de structure constante (H ; $H_{max}$, $H_2$) le long de l'axe transversal (11; 11a ; 11b ; 11c).

**4.** Antenne guide d'onde selon l'une des revendications précédentes, **caractérisée en ce que** le guide d'onde (2 ; 2b ; 2c ; 2d ; 2f) présente une section orientée dans une direction z verticale par rapport à la direction x avec deux parois latérales (5 ; 5b ; 5c ; 5d ; 5e ; 5f) disposées de manière opposée, sur les côtés intérieurs (14) desquelles des nervures (10 ; 10b) sont prévues comme éléments de structure.

**5.** Antenne guide d'onde selon la revendication 4, **caractérisée par** une nervure à deux étages (10b) symétrique par rapport à l'axe transversal (11b).

**6.** Antenne guide d'onde selon la revendication 4 ou 5, **caractérisée en ce que** les nervures (10 ; 10b) de parois latérales (11 ; 11b) opposées sont disposées de façon décalées le long de la direction x.

**7.** Antenne guide d'onde selon l'une des revendications précédentes, **caractérisée en ce qu'**un diélectrique ou des écrans disposés à distance périodique sont prévus pour le raccourcissement de la longueur d'onde du guide d'onde ($\lambda_1$, $\lambda_2$) dans le guide d'onde (2 ; 2b ; 2c ; 2d ; 2f).

**8.** Antenne guide d'onde selon l'une des revendications précédentes, **caractérisée en ce que** le guide d'onde (2 ; 2b ; 2c ; 2d ; 2f) est relié à une plaque de base (9 ; 9a ; 9c).

**9.** Antenne guide d'onde selon la revendication 8, **caractérisée par** des rainures (10a) ou des nervures (10c) disposées sur la plaque de base (9a ; 9c) comme éléments de structure.

**10.** Antenne guide d'onde selon l'une des revendications précédentes, **caractérisée en ce qu'**une section transversale du guide d'onde (2 ; 2b ; 2c ; 2d ; 2f) change dans la direction z verticale.

**11.** Antenne guide d'onde selon la revendication 10, **caractérisée en ce que** la section transversale du guide d'onde (2b ; 2c ; 2d ; 2f) est conçue en forme de sablier, les parois latérales (5b ; 5c ; 5d ; 5e ; 5f) présentant respectivement une courbure (15) dirigée vers l'espace intérieur (4 ; 4b ; 4c ; 4d ; 4f).

**12.** Capteur radar comprenant

- au moins deux antennes guides d'onde selon l'une des revendications précédentes, les antennes étant disposées sur une plaque de base (9) de telle sorte qu'un espace (36) est formé entre les parois latérales des antennes
- un dispositif pour le traitement de signaux à haute fréquence
- un dispositif pour le traitement de signaux à basse fréquence des composants (37) du dispositif pour le traitement de signaux à haute fréquence et/ou du dispositif pour le traitement de signaux à basse fréquence étant intégrés dans la plaque de base (9) et/ou disposés dans un espace (36) entre les parois latérales des antennes.

**13.** Capteur radar selon la revendication 12, le dispositif pour le traitement de signaux à basse fréquence comprenant une platine et celle-ci étant disposée de façon intégrée dans la plaque de base.

**14.** Capteur radar selon la revendication 12, au moins un condensateur étant disposé dans un espace (36) entre les parois latérales des antennes, comme composant du dispositif pour le traitement de signaux à basse fréquence.

Fig. 1

Fig. 2

Fig. 3

14

12
3
14
$H_2$
$H_{max}$
5b
15
11b
10b
15
16
4b
15
5b
8b
1b
2b
9
17

Fig. 4

Fig. 5

Fig. 6

Fig. 7

Fig. 8

Fig. 9

Fig. 10

Fig. 11

Fig. 12

Fig. 13

EP 2 553 761 B1

Fig. 14

Fig. 15 a

Fig. 15 b

**IN DER BESCHREIBUNG AUFGEFÜHRTE DOKUMENTE**

**In der Beschreibung aufgeführte Patentdokumente**

- US 5572228 A
- WO 2006039896 A1

**In der Beschreibung aufgeführte Nicht-Patentliteratur**

- **IWASAKI et al.** A Novel Composite Right/Left-Handed Rectangular Waveguide with Tilted Corrugations and its Application to Millimenter- Wave-Frequency Scanning Antenna. *IEICE Transactions on Communications Society,* 01. Dezember 2009, ISSN 0916-8516, 3834-3849